# EUROPÄISCHE PATENTSCHRIFT

(11) **EP 1 359 034 B1**
(45) Veröffentlichungstag und Bekanntmachung des Hinweises auf die Patenterteilung: **16.01.2008**
(21) Anmeldenummer: 03009479.1
(22) Anmeldetag: 26.04.2003
(51) Int. Cl.: B60H 1/32

(54) **Ableitungssystem für ein Fahrzeug-Klimaanlagen-System**
Draining system for a vehicle air conditioner
Système de drainage pour un climatiseur de véhicule

(30) Priorität: 30.04.2002 US 135243
(43) Veröffentlichungstag der Anmeldung: 05.11.2003
(73) Patentinhaber: DEERE & COMPANY, Moline, Illinois 61265-8098 (US)
(72) Erfinder: Bruss, Paul Thomas, Cedar Falls, IA 50613 (US)
(74) Vertreter: Lau-Loskill, Philipp

(56) Entgegenhaltungen:
- FR-A- 1 376 233
- US-A- 3 918 271
- US-A- 4 671 076
- US-A- 5 775 318
- PATENT ABSTRACTS OF JAPAN Bd. 0165, Nr. 07 (M-1327), 20. Oktober 1992 (1992-10-20) & JP 4 186035 A (EBARA CORP), 2. Juli 1992 (1992-07-02)

## Beschreibung

Die Erfindung betrifft Ableitungssystem für ein Fahrzeug-Klimaanlagen-System, in dem eine Klimaanlage vorgesehen ist, in der Wasser kondensieren kann.

Klimaanlagen-Systeme umfassen üblicherweise einen Abflussauslass, über den kondensiertes Wasser abgeleitet werden kann, das während des Kühlvorgangs entsteht. In vielen Systemen ist die Lüftereinheit, die die gekühlte Luft in einen zu kühlenden Raum bläst, beispielsweise in eine Fahrzeugkabine, stromabwärtig des Abflussauslasses angeordnet, so dass das kondensierte Wasser bzw. das Kondensat einem Unterdruck ausgesetzt ist. Lediglich beispielhaft wird auf die US 3,918,271 verwiesen, aus der ein solches konventionelles Klimaanlagen-System bekannt ist.

Der auf die Abflussleitung wirkende Unterdruck der Luft kann bewirken, dass Luft, Staub und Schmutz in das System eingesaugt wird. Das Einziehen von Schmutz in das System verringert seine Leistung und die Lebensdauer der Lüftereinheit und bläst Schmutz in den zu kühlenden Raum. Bei manchen Systemen wird eine Falle oder eine eine Wasserfalle bildende Schleife in der Abflussleitung eingesetzt, um zu verhindern, dass Schmutz in das System eingesaugt wird. Andere Systeme verwenden einfache Absperrventile. Allerdings verstopfen solche Schleifen oder Ventile oft die Abflussleitung aufgrund eines unzureichenden Wasserflusses, der den Schmutz nicht aus der Leitung spülen kann.

Solche Verstopfungen können bewirken, dass Wasser auf die Bodenabdeckung beim Bediener, auf Motoren und Filter fließt und diese entsprechend beschädigt.

Noch ein Beispiel eines Ableitungssystems ist in JP 4 186 035 genannt, das als basis für den Oberbegriff des Anspruchs 1 gilt.

Die der Erfindung zugrunde liegende Aufgabe wird darin gesehen, ein Ableitungssystem für ein Fahrzeug-Klimaanlagen-System der eingangs genannten Art anzugeben, durch die die vorgenannten Probleme überwunden werden. Insbesondere soll ein Ableitungssystem für ein Fahrzeug-Klimaanlagen-System angegeben und weitergebildet werden, das nicht verstopft und das keinen Schmutz aus der Umgebung in die Abflussleitung des Fahrzeug-Klimaanlagen-Systems zieht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Ableitungssystem für ein Fahrzeug-Klimaanlagen-System, in dem eine Klimaanlage vorgesehen ist, in der Wasser kondensieren kann, umfasst eine Lüftungseinheit, mit welcher gekühlte Luft durch eine Luftleitung blasbar ist, einen Abflussauslass, über den kondensiertes Wasser von der Klimaanlage ablassbar ist, ein Anschlussstück, das ein erstes Rohr, ein zweites Rohr und ein drittes Rohr aufweist, wobei die Rohre jeweils nahe einem gemeinsamen Schnittpunkt miteinander verbunden sind, eine Verbindungsleitung zum Leiten von Wasser, mit der das erste Rohr mit dem Abflussauslass verbindbar ist, und eine Verbindungsleitung, mit der unter Druck stehende Luft von der Luftleitung zum zweiten Rohr leitbar ist, und wobei das zweite und das dritte Rohr derart ausgerichtet sind, dass Luft und kondensiertes Wasser weg von dem gemeinsamen Schnittpunkt und durch das dritte Rohr fließen.

In erfindungsgemäßer Weise ist erkannt worden, dass der Schmutz aus der Umgebung insbesondere dann nicht in die Abflussleitung gezogen wird, wenn die Abflussleitung mit Überdruck beaufschlagt wird. Dieser Überdruck wird von der Verbindungsleitung zur Verfügung gestellt, die die unter Druck stehende Luft von der Luftleitung zum zweiten Rohr transportiert. In vorteilhafter Weise ist zur Ausbildung des erfindungsgemäßen Ableitungssystems für ein Fahrzeug-Klimaanlagen-System keine zusätzliche Lüftereinheit erforderlich, da die Lüftereinheit des Fahrzeug-Klimaanlagen-Systems genutzt wird.

Somit wird durch den an der Abflussleitung anliegenden Überdruck einerseits erreicht, dass kein Schutz aus der Umgebung in das Fahrzeug-Klimaanlagen-System eingesaugt wird und andererseits treten aufgrund des an der Abflussleitung anliegenden Überdrucks so gut wie keine Verstopfungen auf.

In einer bevorzugten Ausführungsform sind das erste und das zweite Rohr derart zueinander ausgerichtet, dass die durch das zweite Rohr geblasene Luft nicht in das erste Rohr eintritt. Dies könnte beispielsweise dadurch erzielt werden, dass in Betriebsstellung das zweite und das dritte Rohr im Wesentlichen vertikal angeordnet sind und das erste Rohr im Wesentlichen horizontal von dem zweiten und dem dritten Rohr abragt. Weiterhin könnte in Betriebsstellung das zweite und das dritte Rohr im Wesentlichen von einander abragen, und das erste Rohr im Wesentlichen senkrecht von dem zweiten und dem dritten Rohr abragen.

Vorzugsweise weist das dritte Rohr ein stromabwärtiges Ende auf, das in Betriebsstellung nicht oberhalb seines stromaufwärtigen Endes angeordnet ist, und/oder das erste Rohr weist ein stromabwärtiges Ende auf, das nicht oberhalb seines stromaufwärtigen Endes angeordnet ist.

Obwohl von einem ersten, einem zweiten und/oder einem dritten Rohr die Rede ist, könnte es sich hierbei ganz allgemein um eine Leitung oder eine Verbindung handeln, die zum Transport von Luft und/oder Wasser geeignet ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Darstellung eines, nicht beantspruchten, Ausführungsbeispiels betreffend einer Klimaanlage und
- Fig. 2: eine schematische Darstellung eines erfindungsgemäßen Ausführungsbeispiels.

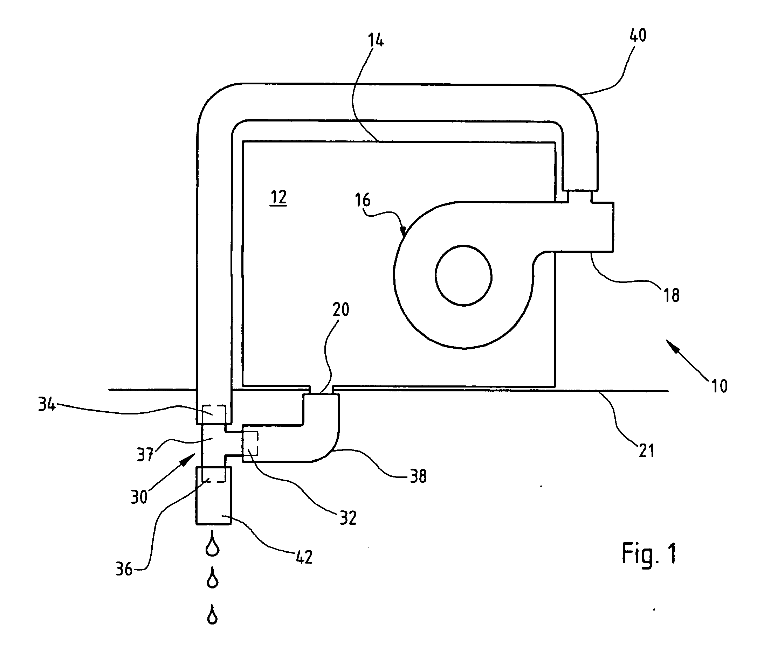

Fig. 1 zeigt ein Klimaanlagen-System 10, das eine Klimaanlage oder eine HVAC-Einheit 12 aufweist, die ein Gehäuse 14 umfasst, das konventionelle - nicht gezeigte - Heizungs- und Kühlungseinheiten umfasst. Die Abkürzung HVAC steht für den englischen Begriff "heating, ventilating and air conditioning".

Eine Lüftereinheit 16 empfängt gekühlte Luft von der HVAC-Einheit 12 und leitet gekühlte Luft zum Rohr 18 ab. Das Gehäuse 14 umfasst einen konventionellen Abflussauslass 20 für kondensiertes Wasser, der oberhalb eines Bodens 21 einer nicht eingezeichneten Fahrzeugkabine befestigt bzw. angeordnet sein könnte.

Der Auslass umfasst für das Kondensat ein Anschlussstück 30, das ein erstes Rohr 32, ein zweites Rohr 34 und ein drittes Rohr 36 aufweist, die an einem Schnittpunkt 37 miteinander verbunden sind. Der Abflussauslass 20 steht über eine erste Leitung oder über einen ersten Schlauch 38 mit dem ersten Rohr 32 in Verbindung. Eine zweite Leitung oder ein zweiter Schlauch 40 übermittelt unter Druck stehende Luft vom luftführenden Rohr 18 zum freien Ende des zweiten Rohrs 34. Eine Auslassleitung oder ein Schlauch 42 ist vorgesehen, um das freie Ende des dritten Rohrs 36 mit der Umgebung zu verbinden. In Fig. 1 ist gezeigt, dass die Rohre 32, 34 und 36 ein T-förmiges Anschlussstück bilden, wobei das zweite Rohr 34 und das dritte Rohr 36 voneinander abragen und das erste Rohr 32 senkrecht davon abragt.

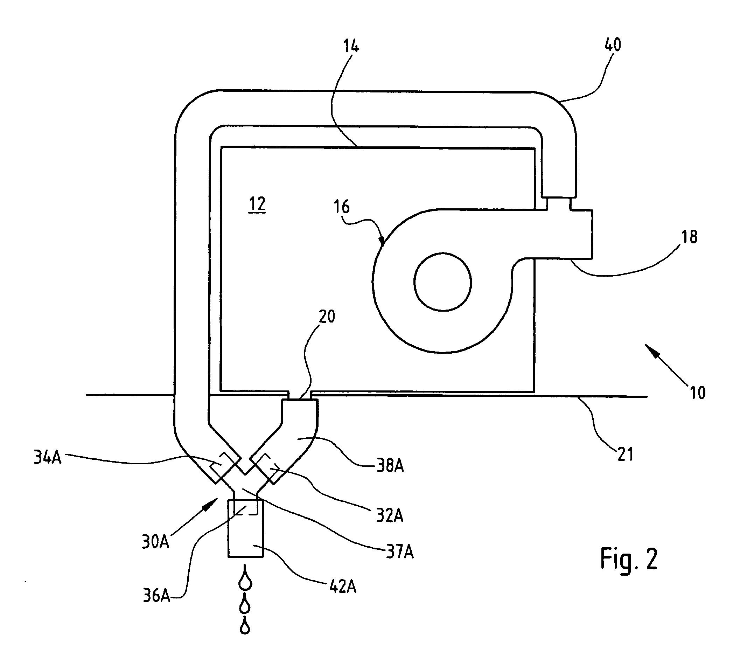

In Fig. 2 ist ein Ausführungsbeispiel gezeigt, in dem das Anschlussstück 30A die Rohre 32A, 34A und 36A umfasst, die ein Y-förmiges Anschlussstück bilden. Hierbei ist ein Winkel von größer als 90 Grad zwischen dem ersten Rohr 32A und dem dritten Rohr 36A gebildet. Ein Winkel von größer als 90 Grad ist zwischen dem zweiten Rohr 34A und dem dritten Rohr 36A gebildet. Vorzugsweise ist das erste Rohr 32A und das zweite Rohr 34A derart zueinander angeordnet, dass es unwahrscheinlich ist, dass die vom zweiten Rohr 34A kommende Luft in das erste Rohr 32A eintritt.

In beiden Ausführungsbeispielen können die drei Rohre unterschiedliche Ausrichtungen aufweisen, wenn nur das stromabwärtige Ende des dritten Rohrs 36 bzw. 36A nicht oberhalb seines stromaufwärtigen Endes liegt und/oder wenn nur das stromabwärtige Ende des ersten Rohrs 32 bzw. 32A nicht oberhalb seines stromaufwärtigen Endes angeordnet ist.

In beiden Ausführungsbeispielen fließt kondensiertes Wasser und unter Druck stehende Luft zusammen durch das dritte Rohr 36 bzw. 36A und weg von dem Schnittpunkt 37 aus dem dritten Rohr 36 bzw. 36A heraus und durch die Verbildungsleitung 42 bzw. 42A zur Umgebung. Im Ergebnis hilft der Fluss der unter Druck stehenden Luft durch das dritte Rohr 36, 36A und durch die Verbildungsleitung 42 zur Umgebung, den Eintritt von Schmutz und Staub in das dritte Rohr 36, 36A und in die Verbildungsleitung 42, 42A von der Umgebung aus zu verhindern.

Demnach bläst die Lüftereinheit 16 nicht nur Luft in das Rohr 18, sie setzt die Luft in Rohr 18 auch unter Druck. Der zweite Schlauch 40 setzt das Anschlussstück 30 bzw. 30A und die Verbindungsleitung 42 zur Umgebung unter Überdruck. Dieser Überdruck ist nicht so hoch, dass hierdurch das kondensierte Wasser nicht mehr aus dem Abflussauslass 20 zur Verbindungsleitung 42 zur Umgebung abfließen kann, so dass noch Wasser von der HVAC-Einheit 12 abfließen kann. Dennoch verhindert der Überdruck, dass Luft oder Schmutz von der äußeren Umgebung in die Verbindungsleitung 42 eingezogen wird. Hierdurch wird in vorteilhafter Weise das Verstopfen von Rohren oder Verbindungsleitungen verhindert, ohne eine Wasserfalle einsetzen zu müssen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen wie in den Ansprüchen definiert.

## Patentansprüche

1. Ableitungssystem für ein Fahrzeug-Klimaanlagen-System (10), in dem eine Klimaanlage (12) vorgesehen ist, in der Wasser kondensieren kann, mit einer Lüftungseinheit (16), mit der gekühlte Luft durch eine Luftleitung (18) blasbar ist, mit einem Abflussauslass (20), über den kondensiertes Wasser von der Klimaanlage (12) ablassbar ist, mit einem Anschlussstück (30; 30A), das ein erstes Rohr (32; 32A), ein zweites Rohr (34; 34A) und ein drittes Rohr (36; 36A) aufweist, wobei die Rohre (32, 34, 36; 32A, 34A, 36A) jeweils nahe einem gemeinsamen Schnittpunkt (37; 37A) miteinander verbunden sind, mit einer Verbindungsleitung (42) zum Leiten von Wasser, mit der das erste Rohr (32; 32A) mit dem Abflussauslass (20) verbindbar ist, und mit einer Verbindungsleitung (40), mit der unter Druck stehende Luft von der Luftleitung (18) zum zweiten Rohr (34; 34A) leitbar ist, und wobei das zweite Rohr (34; 34A) und das dritte Rohr (36; 36A) derart angeordnet sind, dass Luft und kondensiertes Wasser weg von dem gemeinsamen Schnittpunkt (37; 37A) und durch das dritte Rohr (36; 36A) fließen, das dritte Rohr (36; 36A) ein stromabwärtiges Ende aufweist, das nicht oberhalb seinem stromaufwärtigen Ende angeordnet ist, **dadurch gekennzeichnet, dass** das erste, das zweite und das dritte Rohr (32A, 34A, 36A) eine Y-förmige Anordnung aufweisen und dass das erste Rohr (32; 32A) und das zweite Rohr (34; 34A) derart zueinander angeordnet sind, dass die durch das zweite Rohr (34; 34A) geblasene Luft nicht in das erste Rohr (32; 32A) eintritt.

2. Ableitungssystem nach Anspruch 1, wobei das zweite Rohr (34) und das dritte Rohr (36) im Wesentlichen vertikal angeordnet sind und wobei das erste Rohr (32) im Wesentlichen horizontal weg von dem zweiten Rohr (34) und dem dritten Rohr (36) abragt.

3. Ableitungssystem nach einem der vorhergehenden Ansprüche, wobei das zweite Rohr (34) und das dritte Rohr (36) im Wesentlichen weg von einander abragen und wobei das erste Rohr (32) im Wesentlichen senkrecht von dem zweiten Rohr (34) und dem dritten Rohr (36) abragt.

4. Ableitungssystem nach einem der vorhergehenden Ansprüche, wobei das erste Rohr (32; 32A) ein stromabwärtiges Ende aufweist, das nicht oberhalb seinem stromaufwärtigen Ende angeordnet ist.

5. Ableitungssystem nach einem der vorhergehenden Ansprüche, wobei das erste, das zweite und das dritte Rohr (32, 34, 36) eine T-förmige Anordnung aufweisen.

## Claims

1. Drainage system for a vehicle air conditioning system (10) in which an air conditioner (12) is provided in which water can condense, having a ventilation unit (16) by means of which cooled air can be blown through an air line (18), having an outflow outlet (20), via which condensed water can be drained from the air conditioner (12), having a connection piece (30; 30A) which has a first tube (32; 32A), a second tube (34; 34A) and a third tube (36; 36A), wherein the tubes (32, 34, 36; 32A, 34A, 36A) are in each case connected to one another close to a common point of intersection (37; 37A), having a connecting line (42) for conducting water, by means of which connecting line (42) the first tube (32; 32A) can be connected to the outflow outlet (20), and having a connecting line (40), by means of which pressurized air can be conducted from the air line (18) to the second tube (34; 34A), and with the second tube (34; 34A) and the third tube (36; 36A) being arranged such that air and condensed water flow away from the common point of intersection (37; 37A) and through the third tube (36; 36A), with the third tube (36; 36A) having a downstream end which is not arranged above its upstream end, **characterized in that** the first, the second and the third tube (32A, 34A, 36A) have a Y-shaped arrangement, and **in that** the first tube (32; 32A) and the second tube (34; 34A) are arranged with respect to one another in such a way that the air which is blown through the second tube (34; 34A) does not enter into the first tube (32; 32A).

2. Drainage system according to Claim 1, wherein the second tube (34) and the third tube (36) are arranged substantially vertically, and wherein the first tube (32) projects substantially horizontally away from the second tube (34) and the third tube (36).

3. Drainage system according to one of the preceding claims, wherein the second tube (34) and the third tube (36) project substantially away from one another, and wherein the first tube (32) projects substantially perpendicularly from the second tube (34) and the third tube (36).

4. Drainage system according to one of the preceding claims, wherein the first tube (32; 32A) has a downstream end which is not arranged above its upstream end.

5. Drainage system according to one of the preceding claims, wherein the first, the second and the third tube (32, 34, 36) have a T-shaped arrangement.

## Revendications

1. Système de dérivation pour un système de climatisation de véhicule (10), dans lequel il est prévu une installation de climatisation (12), dans laquelle de l'eau peut se condenser, comprenant une unité de ventilation (16), avec laquelle de l'air refroidi peut être soufflé par une conduite d'air (18), une sortie d'écoulement (20), par laquelle de l'eau condensée peut être évacuée de l'installation de climatisation (12), une pièce de raccord (30 ; 30A), qui présente un premier tuyau (32 ; 32A), un second tuyau (34 ; 34A) et un troisième tuyau (36, 36A), les tuyaux (32, 34, 36 ; 32A, 34A, 36A) étant reliés entre eux à chaque fois à proximité d'un point d'intersection (37 ; 37A) commun, une conduite de liaison (42) pour le guidage de l'eau, avec laquelle le premier tuyau (32 ; 32A) peut être relié à la sortie d'écoulement (20) et une conduite de liaison (40), avec laquelle de l'air sous pression peut être acheminé de la conduite d'air (18) au second tuyau (34 ; 34A), et le second tuyau (34 ; 34A) et le troisième tuyau (36 ; 36A) étant disposés de telle sorte que de l'air et de l'eau condensée circulent à partir du point d'intersection (37 ; 37A) commun et à travers le troisième tuyau (36 ; 36A), le troisième tuyau (36 ; 36A) présentant une extrémité côté aval, qui n'est pas disposée au-dessus de son extrémité côté amont, **caractérisé en ce que** le premier, le second et le troisième tuyaux (32A, 34A, 36A) présentent un agencement en Y et **en ce que** le premier tuyau (32 ; 32A) et le second tuyau (34, 34A) sont disposés l'un par rapport à l'autre de telle sorte que l'air soufflé par le second tuyau (34 ; 34A) n'entre pas dans le premier tuyau (32 ; 32A).

2. Système de dérivation selon la revendication 1, le second tuyau (34) et le troisième tuyau (36) étant disposés sensiblement verticalement et le premier tuyau (32) dépassant sensiblement horizontalement du second tuyau (34) et du troisième tuyau (36).

3. Système de dérivation selon l'une quelconque des revendications précédentes, le second tuyau (34) et le troisième tuyau (36) dépassant sensiblement l'un de l'autre et le premier tuyau (32) dépassant sensiblement à la perpendiculaire du second tuyau (34) et du troisième tuyau (36).

4. Système de dérivation selon l'une quelconque des revendications précédentes, le premier tuyau (32 ; 32A) présentant une extrémité côté aval du flux, qui n'est pas disposée au-dessus de son extrémité côté amont du flux.

5. Système de dérivation selon l'une quelconque des revendications précédentes, le premier, le second et le troisième tuyaux (32, 34, 36) présentant un agencement en T.
